(19) Europäisches Patentamt
European Patent Office
Office européen des brevets

(11) Veröffentlichungsnummer: **0 008 029**
**A1**

(12) **EUROPÄISCHE PATENTANMELDUNG**

(21) Anmeldenummer: **79102586.9**

(22) Anmeldetag: **23.07.79**

(51) Int. Cl.³: **C 09 B 31/04**, C 07 C 107/00, D 06 P 3/48, D 06 P 3/54

(30) Priorität: **03.08.78 DE 2834054**

(43) Veröffentlichungstag der Anmeldung: **20.02.80 Patentblatt 80/4**

(84) Benannte Vertragsstaaten: **BE CH DE FR GB IT**

(71) Anmelder: **CASSELLA Aktiengesellschaft, Hanauer Landstrasse 526, D-6000 Frankfurt am Main 61 (DE)**

(72) Erfinder: **Bühler, Ulrich, Dr., Nidderauer Strasse 13, D-6369 Schöneck 1 (DE)**
Erfinder: **Heinrich, Ernst, Dr., Ernst-Reuter-Strasse 25, D-6078 Neu-Isenburg (DE)**
Erfinder: **Ribka, Joachim, Dr., Rügener Strasse 4, D-6050 Offenbach (DE)**
Erfinder: **Tappe, Horst, Dr., Ringstrasse 9, D-6057 Dietzenbach (DE)**
Erfinder: **Kosubek, Uwe, Am Vogelanger 28, D-6087 Büttelborn 2 (DE)**
Erfinder: **Löwenfeld, Rudolf, Dr., Quellenweg 2, D-6072 Dreieich (DE)**

(74) Vertreter: **Urbach, Hans-Georg, Dr. et al, Hanauer Landstrasse 526, D-6000 Frankfurt am Main 61 (DE)**

(54) **Wasserunlösliche Disazofarbstoffe, ihre Herstellung und Verwendung.**

(57) Wasserunlösliche Disazofarbstoffe der Formel I

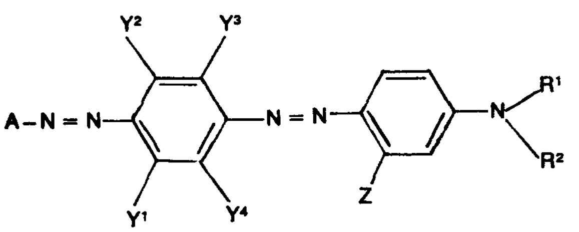

(I)

worin A für einen Phenylrest der Formel II

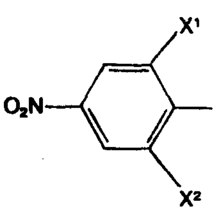

(II)

worin $X^1$ Wasserstoff, Alkyl mit 1 bis 3 C-Atomen, Chlor, Brom, Nitro oder Cyan, $X^2$ Wasserstoff, Chlor oder Brom,
$Y^1$ Wasserstoff, Alkyl mit 1 bis 3 C-Atomen oder Chlor,
$Y^2$ Wasserstoff, Alkyl mit 1 bis 3 C-Atomen oder Chlor,
$Y^3$ Wasserstoff, Alkyl mit 1 bis 3 C-Atomen, Alkoxy mit 1 bis 3 C-Atomen oder Chlor,
$Y^4$ Wasserstoff, Alkyl mit 1 bis 3 C-Atomen bedeuten, wobei mindestens einer und höchstens drei der Substituenten
$Y^1$ bis $Y^4$ Wasserstoff sind, und sofern
$X^1$ eine Nitro- oder Cyangruppe ist und
$Y^2$ und $Y^4$ für Wasserstoff stehen, $Y^1$ auch noch Alkanoylamino mit insgesamt 1 bis 3 C-Atomen im Alkanoylrest bedeutet, und sofern $X^1$ für Alkyl mit 1 bis 3 C-Atomen steht,
$Y^1$ auch noch Alkoxy mit 1 bis 3 C-Atomen bedeutet,
Z Wasserstoff, Chlor, Brom, Alkyl mit 1 oder 2 C-Atomen oder Alkoxy mit 1 oder 2 C-Atomen
$R^1$ Wasserstoff, Alkyl mit 1 bis 4 C-Atomen oder Alkenyl mit 3 oder 4 C-Atomen,
$R^2$ Alkyl mit 1 bis 4 C-Atomen oder Alkenyl mit 3 oder 4 C-Atomen bedeuten, werden dadurch hergestellt,

EP 0 008 029 A1

daß eine Aminoazoverbindung der Formel III

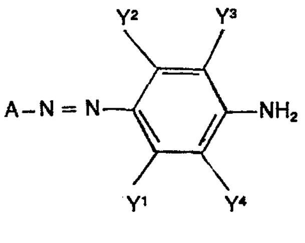

(III)

diazotiert und die erhaltene Diazoniumverbindung auf ein Anilinderivat der Formel IV

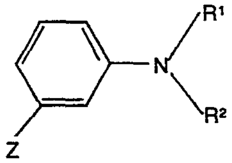

(IV)

gekuppelt wird. Die Farbstoffe werden zum Färben und Bedrucken von Fasermaterialien aus hochmolekularen Polyestern oder Mischungen dieser Materialien mit natürlichen Materialien oder aus Zellulosetriacetat verwendet.

Ref. 3125
Dr.Eu/Ll

Wasserunlösliche Disazofarbstoffe, ihre Herstellung und Verwendung

**Die vorliegende Erfindung betrifft wässerunlösliche Disazofarbstoffe der Formel I**

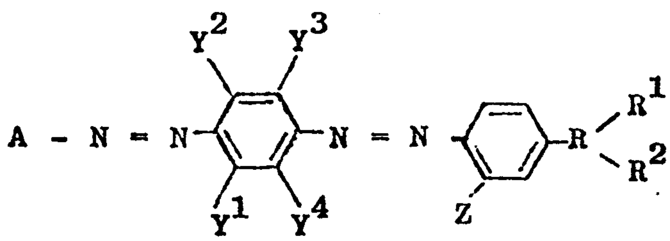

(I)

worin A für einen Phenylrest der Formel II

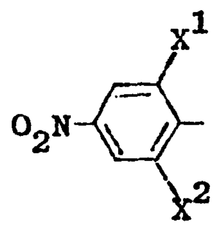

(II)

worin $X^1$ Wasserstoff, Alkyl mit 1 bis 3 C-Atomen, Chlor, Brom, Nitro oder Cyan, $X^2$ Wasserstoff, Chlor oder Brom,
$Y^1$ Wasserstoff, Alkyl mit 1 bis 3 C-Atomen oder Chlor,
$Y^2$ Wasserstoff, Alkyl mit 1 bis 3 C-Atomen oder Chlor,
$Y^3$ Wasserstoff, Alkyl mit 1 bis 3 C-Atomen, Alkoxy mit 1 bis 3 C-Atomen oder Chlor,
$Y^4$ Wasserstoff, Alkyl mit 1 bis 3 C-Atomen bedeuten,
wobei mindestens einer und höchstens drei der Substituenten $Y^1$ bis $Y^4$ Wasserstoff sind, und sofern
$X^1$ eine Nitro- oder Cyangruppe ist und
$Y^2$ und $Y^4$ beide für Wasserstoff stehen, $Y^1$ auch noch Alka-

noylamino mit insgesamt 1 bis 3 C-Atomen im Alkanoylrest bedeutet, und sofern $X^1$ für Alkyl mit 1 bis 3 C-Atomen steht,
$Y^1$ auch noch Alkoxy mit 1 bis 3 C-Atomen bedeutet,
Z Wasserstoff, Chlor, Brom, Alkyl mit 1 oder 2 C-Atomen oder Alkoxy mit 1 oder 2 C-Atomen
$R^1$ Wasserstoff, Alkyl mit 1 bis 4 C-Atomen oder Alkenyl mit 3 oder 4 C-Atomen,
$R^2$ Alkyl mit 1 bis 4 C-Atomen oder Alkenyl mit 3 oder 4 C-Atomen bedeuten.
ihre Herstellung sowie ihre Verwendung zum Färben und Bedrucken von Materialien aus hydrophoben Fasern oder Folien.
Wasserunlösliche Disazofarbstoffe, die zum Färben und Bedrucken von Textilmaterialien aus hydrophoben Fasern verwendet werden können, sind aus zahlreichen Druckschriften bekannt. Vorzugsweise wurden derartige Farbstoffe zur Einstellung grauer und graublauer Nuancen eingesetzt.

Diese bekannten Farbstoffe haben jedoch technische Nachteile, die ihren Einsatz beschränken, wobei vor allem ihr unzureichendes Ziehvermögen aber auch ihre nicht befriedigende Licht- und Trockenhitzefixierechtheit zu nennen ist. Insbesondere das unzureichende Ziehvermögen ist ein technischer Nachteil, der den Einsatz der bekannten Farbstoffe zur Herstellung tief gefärbter marineblauer und schwarzer Färbungen und Drucke erschwert bzw. unmöglich macht. Zur Überwindung dieser Schwierigkeit ist daher bereits vorgeschlagen worden und bekannt, Mischungen von wasserunlöslichen Disazofarbstoffen zur Herstellung tiefgefärbter Blau- und Blaugrau-Töne zu verwenden.

Dieses Verfahren ergibt zwar eine merkliche Verbesserung des Farbaufbaus und der erreichbaren Farbtiefe bringt jedoch erhebliche Schwierigkeiten beim Färben nach modernem Kontinueverfahren mit sich, die auf die unterschiedliche Aufziehgeschwindigkeit der einzelnen Komponenten der Farbstoffmischungen zurückzuführen sind.

Im Hinblick auf die gravierenden technischen Nachteile der bekannten wasserunlöslichen Disazofarbstoffe war es nicht vorherzusehen und daher höchst überraschend, daß die Farbstoffe der vorliegenden Erfindung die Nachteile der bekannten Farbstoffe nicht aufweisen und ein erheblich verbessertes Aufziehvermögen sowie sehr gute Echtheitseigenschaften insbesondere sehr gute Licht- und Trockenhitzefixierechtheit haben.

In obigen Definitionen genannte Alkylgruppen mit 1 - 3 C-Atomen sind Methyl, Äthyl, Propyl und Isopropyl; Alkylgruppen mit 4 Kohlenstoffatomen sind Butyl-(1), Butyl-(2), 2-Methyl-propyl-(1) und 2-Methyl-propyl-(2).

In obigen Definitionen genannte Alkoxygruppen mit 1 - 3 Kohlenstoffatomen sind Methoxy, Äthoxy, Propoxy und Isopropoxy.

Obengenannte Alkenylgruppen mit 3 oder 4 Kohlenstoffatomen sind Propen-2-yl-(1), Propen-1-yl-(1), Buten-2-yl-(1), Buten-3-yl-(1), Buten-2-yl-(2), Buten-3-yl-(2), und 2-Methyl-propen-2-yl-(1). Alkanoylaminogruppen mit 1 - 3 Kohlenstoffatomen im Alkanoylrest sind Formylamino, Acetylamino, Propionylamino.

Bevorzugt im Hinblick auf die anwendungstechnischen Eigenschaften sind solche erfindungsgemäße Farbstoffe der Formel I, in denen für $X^1$, $X^2$, $Y^1$, $Y^2$, $Y^3$ oder $Y^4$ stehende Alkylgruppen Methylgruppen und für $Y^1$ oder $Y^3$ stehende Alkoxygruppen Methoxygruppen sind.

Eine weitere bevorzugte Gruppe von Farbstoffen der Formel I sind solche, in denen A 4-Nitrophenyl, 2,4-Dinitrophenyl, 2-Methyl-4-nitrophenyl, 2-Cyan-4-nitrophenyl, 2,6-Dichlor-4-nitrophenyl oder 2,6-Dibrom-4-nitrophenyl bedeutet.

Im Hinblick auf vorteilhafte anwendungstechnische Eigenschaftenbevorzugt sind auch solche erfindungsgemäßen Farbstoffe der Formel I, in denen $Y^1$ Methyl oder Chlor und $Y^3$ Methoxy, Methyl oder Chlor und $Y^2$ und $Y^4$ Wasserstoff bedeuten und solche, in denen $Y^1$ und $Y^2$ Wasserstoff und

$Y^3$ und $Y^4$ Methyl bedeuten und solche, in denen $Y^3$ Methoxy, $Y^1$ Methyl oder Chlor, $Y^2$ Methyl oder Chlor und $Y^4$ Wasserstoff bedeuten, wobei es besonders günstig ist, wenn $Y^1$ und $Y^2$ gleiche Substituenten sind, und solche, in denen $Y^1$ Alkanoylamino mit 1 - 3 Kohlenstoffatomen, $Y^2$ und $Y^4$ Wasserstoff und $Y^3$ Wasserstoff oder Chlor bedeuten.
Besonders bevorzugt sind solche erfindungsgemäßen Farbstoffe der Formel I, in denen obengenannte bevorzugte Merkmale kombiniert sind, insbesondere solche, in denen $X^1$, $X^2$, $Y^2$ und $Y^4$ Wasserstoff, $Y^1$ Methyl oder Chlor und $Y^3$ Methyl oder Methoxy bedeuten, solche, in denen $X^2$, $Y^2$ und $Y^4$ Wasserstoff, $X^1$ Methyl und $Y^1$ und $Y^3$ Methoxy bedeuten, ferner solche, in denen $X^1/X^2$ die Kombinationen Cyan/Wasserstoff oder Chlor/Chlor und dabei $Y^1$ und $Y^3$ jeweils Methyl und $Y^2$ und $Y^4$ jeweils Wasserstoff bedeuten und schließlich solche, in denen $X^2$, $Y^2$ und $Y^4$ Wasserstoff, $X^1$ Nitro, $Y^1$ Acetylamino und $Y^3$ Chlor bedeuten.

Die erfindungsgemäßen Farbstoffe der Formel I werden in an sich bekannter Weise hergestellt, indem man eine Aminoazoverbindung der Formel III

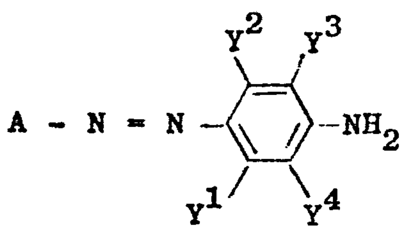

(III)

in an sich bekannter Weise diazotiert und die erhaltene Diazoniumverbindung auf ein Anilinderivat der Formel IV

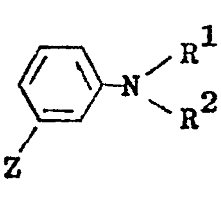

(IV)

gekuppelt wird.

Die Diazotierung der Aminoazobenzole der Formel III geschieht in an sich bekannter Weise durch Einwirkung von salpetriger Säure oder salpetrige Säure abspaltenden Verbindungen. Beispielsweise können die Aminoazobenzole in

Schwefelsäure, Salzsäure oder in niederen aliphatischen Karbonsäuren, wie z.B. Essigsäure oder Propionsäure, gelöst werden und bei 0 bis 60°C durch Zusatz von Nitrosylschwefelsäure bzw. Natriumnitrit diazotiert werden. Die Kupplung wird im sauren wäßrigen Medium bzw. in einer Mischung aus Wasser und einem in Wasser wenig löslichen Alkohol, wie n- oder i-Butanol, bei Temperaturen von 0 bis 30°C ausgeführt. Bevorzugt wird hierbei der Temperaturbereich von 0 bis 5°C. Zur Vervollständigung der Kupplungsreaktion kann es zweckmäßig sein, den pH-Wert des Kupplungssatzes gegen Ende der Reaktion durch Zusatz von Alkalien, wie z.B. von Natriumacetat auf einen Wert von 3 bis 6 zu puffern.
Es kann im Hinblick auf die Formierung der Dispersionsfarbstoffe oder hinsichtlich ihrer Farbausbeute von Vorteil sein, ein Gemisch von zwei oder mehreren Aminoazoverbindungen der Formel III zu diazotieren und mit einem oder mehreren Anilinderivaten der Formel IV zu kuppeln oder eine diazotierte Aminoazoverbindung der Formel III mit zwei oder mehreren Anilinderivaten der Formel IV zu kuppeln oder zwei oder mehrere auf getrenntem Wege dargestellte Einzelfarbstoffe zu mischen.

Eine besonders vorteilhafte Ausführungsform der Herstellung der Farbstoffe der Formel I besteht darin, als Aminoazoverbindung der Formel III das Rohprodukt derselben einzusetzen, d.h. ohne Zwischenisolierung der Aminoazoverbindung zu arbeiten. In diesem Fall wird ein aromatisches Amin der allgemeinen Formel $A-NH_2$ in üblicher Weise diazotiert und auf ein aromatisches Amin der Formel

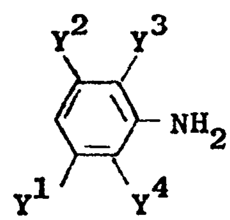

gekuppelt wobei die Reaktionsbedingungen von Diazotierung und Kupplung den oben angegebenen an sich bekannten entsprechen. Nach Beendigung der Kupplungsreaktion wird die erhaltene Reaktionsmischung erforderlichenfalls wieder stärker angesäuert, so daß erneut die Diazotierungsbedingungen hergestellt werden und dann wie mit einer Lösung der reinen Aminoazoverbindung der Formel III in oben beschriebener

Weise weitergearbeitet. Bei dieser als Eintopfverfahren zu bezeichnenden Arbeitsweise werden alle Aufwendungen und Verluste, die mit der Isolierung der Aminoazoverbindung verbunden sind, vermieden.

Für die Herstellung der erfindungsgemäßen Farbstoffe sind Aminoazokomponenten der Formel III sehr wertvoll, bei denen $X^1$ und $X^2$ in folgender Kombination
$X^1/X^2$ = H/H; $CH_3$/H; Cl/H; Br/H; Cl/$CH_3$; Br/$CH_3$; $-NO_2$/H; -C≡N/H; Cl/Br; Cl/Cl; Br/Br; $-NO_2$/Cl; -C≡N/Cl; $NO_2$/Br; -C≡N/Br vorliegen und wobei jeweils die Reste $Y^1$, $Y^2$, $Y^3$ und $Y^4$ in folgender Kombination $Y^1/Y^2/Y^3/Y^4$ enthalten sind:
$CH_3$/H/$OCH_3$/H; $CH_3$/H/$CH_3$/H; Cl/H/$OCH_3$/H; Cl/H/$CH_3$/H;Cl/H/Cl/H; -NH-$COCH_3$/H/$CH_3$/H; -NH-$COCH_3$/H/H/H; -NH-$COCH_3$/H/Cl/H; H/H/$CH_3$/$CH_3$; $CH_3$/$CH_3$/$OCH_3$/H; Cl/Cl/$OCH_3$/H; Cl/$CH_3$/$OCH_3$/H, wobei besonders diejenigen, in denen $X^1/X^2$ H/H; $CH_3$/H; CN/H; Cl/Cl oder $-NO_2$/H ist, bevorzugt sind.

Besonders wertvoll und bevorzugt sind die Kombinationen $X^1/X^2/Y^1/Y^2/Y^3/Y^4$:
H/H/$CH_3$/H/$OCH_3$/H; H/H/Cl/H/$OCH_3$/H; H/H/$CH_3$/H/$CH_3$/H; $CH_3$/H/$CH_3$/H/$CH_3$/H; CN/H/$CH_3$/H/$CH_3$/H; Cl/Cl/$CH_3$/H/$CH_3$/H; $NO_2$/H/-$NHCOCH_3$/H/H/H; $NO_2$/H/-NH-$COCH_3$/H/Cl/H und $CH_3$/H/$OCH_3$/H/$OCH_3$/H.

Für die Herstellung der erfindungsgemäßen Farbstoffe sind Anilinderivate der Formel IV als Kupplungskomponenten sehr wertvoll, bei denen Z Wasserstoff, Methyl, Methoxy, Chlor und Brom ist wobei jeweils die Substituenten $R^1$ und $R^2$ beispielsweise in folgenden Kombinationen $R^1/R^2$ vorliegen können:

Methyl/Wasserstoff; Methyl/Methyl; Methyl/Äthyl; Methyl/Propyl; Methyl/Isopropyl; Methyl/Allyl; Methyl/Crotyl; Methyl/Methallyl; Äthyl/Wasserstoff; Äthyl/Äthyl; Äthyl/Propyl; Äthyl/Isopropyl; Äthyl/Isobutyl; Äthyl/Allyl; Äthyl/(n)Butyl; Propyl/Propyl; Propyl/Allyl; Isopropyl/Propyl; Isopropyl/Allyl; (n)Butyl/(n)Butyl; (n)Butyl/Allyl; Allyl/Allyl; Crotyl/Crotyl.

Die erfindungsgemäßen Farbstoffe eignen sich insbesondere zum Färben und Bedrucken von Materialien aus hydrophoben Fasern oder Folien aus beispielsweise Cellulose-2 1/2 -acetat, Cellulosetriacetat und insbesondere Polyestermaterialien, z.B. Polyäthylenglykolterephthalat oder analogen Polymeren. Sie liefern hierauf nach den üblichen Färbe- und Druckverfahren farbstarke rotviolette bis blaue Färbungen und Drucke mit sehr guten Echtheitseigenschaften.

Die Fasermaterialien können in allen Verarbeitungszuständen vorliegen, wie z.B. Kabel, Kammzug, Fäden, Garne, Stränge, Spulen, Muffs, Gewebe, Gewirke oder gebundene oder nicht gebundene "Non Wovens".

Die Folien können als solche vorliegen oder in einem beliebigen Stadium der Weiterverarbeitung z. B. als geschnittene glatte oder verdrillte Streifen und daraus hergestellte Erzeugnisse.

Die Materialien aus hochmolekularen Polyestern können auch in Mischung mit anderen Materialien, wie z. B. natürlichen Fasern vorliegen. Derartige natürliche Fasern sind z. B. Eiweißfasern, wie Seide oder Wolle und insbesondere natürliche oder regenerierte Zellulosefasern, vorzugsweise Baumwolle.

Das Färben des genannten Fasergutes mit den erfindungsgemäßen Farbstoffen erfolgt zweckmäßig aus wäßriger Suspension in Gegenwart von Carriern zwischen etwa 80 bis 100°C, in Abwesenheit von Carriern zwischen etwa 110 bis 140°C sowie nach dem sogenannten Thermofixierverfahren bei etwa 180 bis 230°C. Das Bedrucken der genannten Materialien kann so durchgeführt werden, daß die mit den neuen Farbstoffen bedruckte Ware in Gegenwart eines Carriers bei Temperaturen zwischen etwa 80 bis 110°C oder auch in Abwesenheit eines Carriers bei etwa 110 bis 140°C gedämpft oder auch nach dem sogenannten Thermofixierverfahren bei etwa 180 bis 230°C behandelt wird.

Die erfindungsgemäßen Farbstoffe eignen sich auch zum Färben der vorstehend aufgeführten hydrophoben Materialien aus organischen Lösungsmitteln und zum Färben in der Masse.

Die Farbstoffe der Formel I sind in Wasser unlöslich. Zur einfachen Herstellung der zum Färben eingesetzten wäßrigen Suspensionen werden die Farbstoffe daher zweckmäßigerweise in Form von Zubereitungen benutzt, in denen sie in feiner Verteilung mit Teilchengrößen von 0,1 bis 10 µ, vorzugsweise von 0,5 bis 2 µ vorliegen.

Die Zubereitungen werden erhalten, indem man die Farbstoffe zusammen mit Flüssigkeiten, vorzugsweise mit Wasser, gegebenenfalls in Gegenwart bekannter Dispergiermittel bis auf die gewünschte Teilchengröße zerkleinert.

Neben dem sehr guten Aufbauvermögen und sehr großer Farbstärke besitzen die erfindungsgemäßen Farbstoffe eine sehr gute Licht- und Thermofixierechtheit und eine hohe pH-Beständigkeit, ferner auch sehr gute Echtheitseigenschaften bei der Wäsche 95 °C, gegenüber Peroxiden, Schweiß sauer und insbesondere alkalisch, Stickoxiden, Abgasen, Alkali, bei der Sodakochechtheit, bei der Hypochlorit-Bleichechtheit bei schwerer Beanspruchung, bei der Reibechtheit und bei der Koratronechtheit.

<u>Beispiel 1</u>

a) 28,6 g 2-Methyl-4-amino-5-methoxy-4'-nitroazobenzol werden in 150 ml Eisessig mit 34,2 g Nitrosylschwefelsäure (41,3 %-ig) unter äußerer Kühlung bis 15° diazotiert und eingetragen in eine Lösung aus 14,9 g 3-N,N-Dimethylaminotoluol in 400 g Wasser und 27,6 g roher Salzsäure (D = 1,15). Die Reaktionstemperatur wird während der Kupplung durch Zugabe von ca. 500 g Eis bei 0 bis 5 °C gehalten. Nach einstündigem Nachrühren wird zur Vervollständigung der Kupplung noch eine Lösung von 136 g Natriumacetat in 250 g Wasser zulaufen gelassen. Der ent-

standende Farbstoff wird nach Beendigung der Kupplung abgesaugt, mit Wasser ausgewaschen und getrocknet. Sofern eine Reinigung erwünscht ist, kann diese durch Umkristallisieren aus n.Butanol erfolgen. Er stellt ein schwärzliches Pulver dar, das sich mit blau—violetter Farbe in konzentrierter Schwefelsäure löst.

b) 1,0 g des im Abschnitt a) hergestellten Farbstoffs der Formel

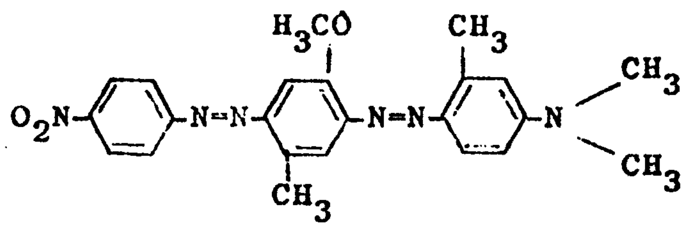

wird in feindispergierter Form in 2000 g Wasser eingerührt. Es wird mit Essigsäure auf einen pH-Wert von 5 - 6 eingestellt und mit 4,0 g Ammoniumsulfat und 2,0 g eines handelsüblichen Dispergiermittels auf Basis eines Naphthalinsulfonsäure-Formaldehyd-Kondensats versetzt.

In die so erhaltene Färbeflotte bringt man 100 g eines Polyestergewebes auf Basis von Polyäthylenglykolterephthalat ein und färbt 1 Stunde bei 130°C.

Nach anschließendem Spülen, reduktiver Nachbehandlung mit einer 0,2%igen alkalischen Natriumdithionitlösung während 15 Minuten bei 70-80°C, Spülen und Trocknen, erhält man eine farbstarke blauviolette Färbung mit sehr guten coloristischen Eigenschaften, insbesondere einer sehr guten Licht- und Thermofixierechtheit.

Beispiel 2

a) 28,6 g 2-Methyl-4-amino-5-methoxy-4'-nitroazobenzol werden in 350 ml n-Salzsäure bei 25°C mit 7,1 g Natriumnitrit in 25 ml Wasser diazotiert und die entstandene Suspension bei 0 - 5°C in eine Suspension aus 12,7 g N-N-Dimethylanilin, 200 ml n-Butanol, 400 ml Wasser und 25 g Natriumacetat (wasserfrei) eingetragen. Der entstandene Farbstoff wird abgesaugt, mit n-Butanol und Wasser gewaschen und getrocknet. Sofern eine Reinigung erwünscht ist, kann diese durch Umkristallisieren aus n-Butanol erfolgen. Er stellt ein schwärzliches Pulver dar, das bei 205°C schmilzt und sich mit blau-violetter Farbe in konzentrierter Schwefelsäure löst.

b) Ein Gewebe aus Polyäthylenglykolterephthalat wird auf dem Foulard bei 30°C mit einer Flotte geklotzt, die 30,0 g des in Abschnitt a) hergestellten und in feine Verteilung gebrachten Farbstoffs der Formel

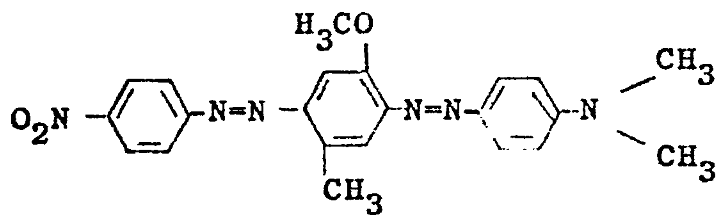

1,0 g Polyacrylamid vom K-Wert 120 und 0,5 g eines Polyglykoläthers des Oleylalkohols und 968,5 g Wasser enthält. Nach dem Trocknen wird 60 Sekunden bei 210°C im Thermofixierrahmen fixiert. Nach anschließendem Spülen und Fertigstellung, wie im Beispiel 1, Absatz 3, beschrieben, erhält man eine farbstarke blaugraue Färbung von sehr guten Echtheitseigenschaften.

Beispiel 3

a) 14,5 g 4-Nitranilin werden in der üblichen Weise in wässrig salzsaurem Medium mit Natriumnitrit diazotiert und bei 25°C auf 13,7 g 2-Methoxy-5-methyl-anilin in 700 ml Wasser und 10 ml roher Salzsäure gekuppelt. Nach beendeter Kupplung wird zur Zerstörung des noch vorhandenen diazotierten 4-Nitranilins der Reaktionsansatz auf pH 6 und anschließend wieder auf pH 1 gestellt. Bei 25°C wird nun bei diesem pH das entstandene 2-Methyl-4-amino-5-methoxy-4'-nitro-azobenzol durch Zugabe von 7,8 g Natriumnitrit in 30 ml Wasser diazotiert und in der im Beispiel 2 beschriebenen Weise auf 15,6 g N.N-Diethylanilin gekuppelt. Der erhaltene Farbstoff, der wie im Beispiel 2 isoliert und gereinigt werden kann, stellt ebenfalls ein schwärzliches Pulver dar, das bei 193°C schmilzt und sich mit blau-violetter Farbe in konzentrierter Schwefelsäure löst.

b) 30,0 g des im Abschnitt a) hergestellten Farbstoffs werden in feiner Verteilung einer Druckpaste, die 45,0 g Johannisbrotkernmehl, 6,0 g 3-nitrobenzol-sulfonsaures Natrium und 3,0 g Zitronensäure auf 1000 g enthält, einverleibt. Mit dieser Druckpaste erhält man auf einem Polyestergewebe nach dem Bedrucken, Trocknen und Fixieren im Thermofixierrahmen während 45 Sekunden bei 215°C, Spülen und Fertigstellung, wie im Beispiel 1, Absatz 3, beschrieben, einen farbstarken blaugrauen Druck von sehr guten coloristischen Eigenschaften, insbesondere einer sehr guten Licht- und Thermofixierechtheit.

Beispiel 4

a) 30,6 g 2-Chlor-4-amino-5-methoxy-4'-nitroazobenzol werden in 150 ml Eisessig mit 34,2 g Nitrosylschwefelsäure (41,3%-ig) unter äußerer Kühlung bei 15° diazotiert und eingetragen in eine Lösung aus 16,4 g 3-N,N-Diäthylanilin in 400 g Wasser und 27,6 g roher Salzsäure (D=1,15). Die Reaktionstemperatur wird während der Kupplung durch Zugabe von ca. 500 g Eis bei 0 bis 5°C gehalten. Nach einstündigem Nachrühren wird zur Vervollständigung der Kupplung noch eine Lösung von 136 g Natriumacetat in 250 g Wasser zulaufen gelassen. Der entstandene Farbstoff wird nach Beendigung der Kupplung abgesaugt, mit Wasser ausgewaschen und getrocknet. Sofern eine Reinigung erwünscht ist, kann diese durch Umkristallisieren aus n.Butanol erfolgen. Er stellt ein schwärzliches Pulver dar, das bei 190°C schmilzt und sich mit blau-violetter Farbe in konzentrierter Schwefelsäure löst.

b) 100 g Polyestermaterial werden 30 Minuten bei 121°C in 1500 g Tetrachloräthylen behandelt, in denen 2,0 g des gemäß Abschnitt a) hergestellten Farbstoffs der Formel

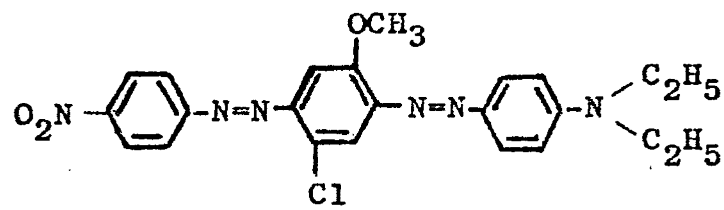

gelöst sind. Man spült mit warmem und kaltem Tetrachloräthylen und erhält eine kräftige blaugraue Färbung von sehr guten coloristischen Eigenschaften.

In der folgende Tabelle sind weitere erfindungsgemäße Farbstoffe aufgeführt, die in Analogie zu den Ausführungsbeispielen 1 bis 4 , Abschnitte a), hergestellt und gemäß den Abschnitten b) appliziert werden können. Auch diese Farbstoffe liefern hervorragend farbstarke, licht- und trockenhitzefixierechte Färbungen und Drucke.

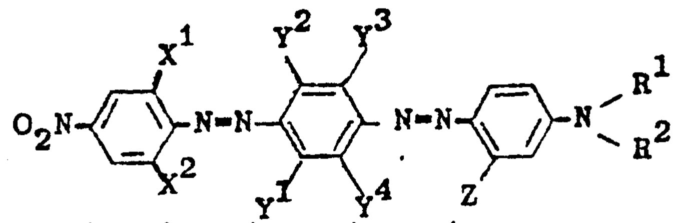

| | $X^1$ | $X^2$ | $Y^1$ | $Y^2$ | $Y^3$ | $Y^4$ | Z | $R^1$ | $R^2$ | Nuance auf Polyester |
|---|---|---|---|---|---|---|---|---|---|---|
| 1. | H | H | $CH_3$ | H | $CH_3$ | H | H | $CH_3$ | $CH_3$ | rotviolett |
| 2. | H | H | $CH_3$ | H | $CH_3$ | H | $CH_3$ | $CH_3$ | $CH_3$ | rotviolett |
| 3. | H | H | $CH_3$ | H | $CH_3$ | H | H | $CH_3$ | $C_2H_5$ | rotviolett |
| 4. | H | H | Cl | H | $OCH_3$ | H | H | $CH_3$ | $CH_3$ | rotstichig marine |
| 5. | H | H | Cl | H | $OCH_3$ | H | $CH_3$ | $CH_3$ | $CH_3$ | rotstichig marine |
| 6. | H | H | H | H | $CH_3$ | $CH_3$ | H | $CH_3$ | $CH_3$ | rotviolett |
| 7. | H | H | H | H | Cl | $CH_3$ | $CH_3$ | $CH_3$ | $CH_3$ | rotstichiges violett |
| 8. | H | H | Cl | H | Cl | H | H | $CH_3$ | $CH_3$ | rotstichiges marine |
| 9. | H | H | $CH_3$ | $CH_3$ | $OCH_3$ | H | H | $C_2H_5$ | $C_2H_5$ | rotstichiges braun |
| 10. | $NO_2$ | H | Acetylamino | H | H | H | $CH_3$ | $CH_3$ | $CH_3$ | blaugrau |
| 11. | $CH_3$ | H | Cl | H | $OCH_3$ | H | H | $CH_3$ | $CH_3$ | rotstichiges marine |
| 12. | $CH_3$ | H | $CH_3$ | H | $OCH_3$ | H | H | $C_2H_5$ | $C_2H_5$ | rotstichiges marine |
| 13. | $CH_3$ | H | $CH_3$ | H | $CH_3$ | H | H | $C_2H_5$ | $C_2H_5$ | rotviolett |
| 14. | Cl | H | Cl | H | $OCH_3$ | H | $CH_3$ | $CH_3$ | $CH_3$ | rotstichiges marine |
| 15. | Cl | H | $CH_3$ | H | $OCH_3$ | H | H | $CH_3$ | $CH_3$ | rotstichiges marine |
| 16. | Cl | H | $CH_3$ | H | $CH_3$ | H | H | $CH_3$ | $C_2H_5$ | violett |
| 17. | Cl | Cl | $CH_3$ | H | $OCH_3$ | H | H | $C_2H_5$ | $C_2H_5$ | rotbraun |
| 18. | Cl | Cl | $CH_3$ | H | $CH_3$ | H | H | $C_2H_5$ | $C_2H_5$ | rotstichiges braun |
| 19. | Cl | Cl | $CH_3$ | H | $CH_3$ | H | H | $CH_3$ | $CH_3$ | rotstichiges braun |
| 20. | Br | Br | $CH_3$ | H | $CH_3$ | H | H | $C_2H_5$ | $C_2H_5$ | rotstichiges braun |

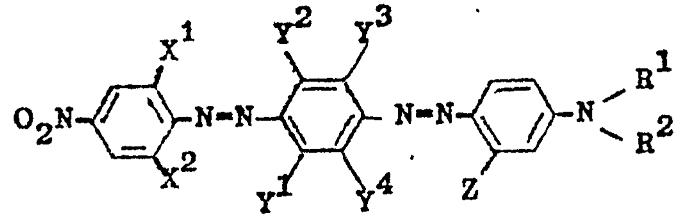

| | $X^1$ | $X^2$ | $Y^1$ | $Y^2$ | $Y^3$ | $Y^4$ | Z | $R^1$ | $R^2$ | Nuance auf Polyester |
|---|---|---|---|---|---|---|---|---|---|---|
| 21. | Br | Br | $CH_3$ | H | $CH_3$ | H | H | $CH_3$ | $CH_3$ | rotstichiges braun |
| 22. | Cl | Cl | Cl | H | $OCH_3$ | H | H | $CH_3$ | $CH_3$ | rot braun |
| 23. | CN | H | $CH_3$ | H | $CH_3$ | H | H | $C_2H_5$ | $C_2H_5$ | blaugrau |
| 24. | CN | H | $CH_3$ | H | $CH_3$ | H | $CH_3$ | $C_2H_5$ | $C_2H_5$ | blaugrau |
| 25. | CN | H | $CH_3$ | H | $OCH_3$ | H | H | $C_2H_5$ | $C_2H_5$ | rotstichiges marine |
| 26. | CN | H | Cl | H | $OCH_3$ | H | $CH_3$ | $C_2H_5$ | $C_2H_5$ | marine |
| 27. | CN | H | Cl | H | Cl | H | H | $CH_3$ | $CH_3$ | marine |
| 28. | $NO_2$ | H | $NHCOCH_3$ | H | H | H | $CH_3$ | $C_2H_5$ | $C_2H_5$ | blaustichig grün |
| 29. | $NO_2$ | H | $NHCOCH_3$ | H | H | H | H | $CH_3$ | $CH_3$ | marine |
| 30. | $NO_2$ | H | $NHCOCH_3$ | H | H | H | H | $C_2H_5$ | $C_2H_5$ | blaustichig grün |
| 31. | $NO_2$ | H | $NHCOCH_3$ | H | Cl | H | H | $CH_3$ | $CH_3$ | marine |
| 32. | $NO_2$ | H | $NHCOCH_3$ | H | Cl | H | H | $C_2H_5$ | $C_2H_5$ | grünstichig marine |
| 33. | $NO_2$ | H | $NHCOCH_3$ | H | Cl | H | $CH_3$ | $CH_3$ | $CH_3$ | grünstichig marine |
| 34. | $NO_2$ | H | $NHCOCH_3$ | H | Cl | H | $CH_3$ | $C_2H_5$ | $C_2H_5$ | türkis |
| 35. | $CH_3$ | H | $OCH_3$ | H | $OCH_3$ | H | H | $C_2H_5$ | $C_2H_5$ | rotstichiges marine |
| 36. | $CH_3$ | H | $OCH_3$ | H | $OCH_3$ | H | $CH_3$ | $CH_3$ | $CH_3$ | rotstichiges marine |
| 37. | $CH_3$ | H | $OCH_3$ | H | $OCH_3$ | H | $CH_3$ | $C_2H_5$ | $C_2H_5$ | rotstichiges marine |
| 38. | CN | H | $NHCOCH_3$ | H | H | H | $CH_3$ | $CH_3$ | $CH_3$ | blaustichig grün |
| 39. | Br | Br | $CH_3$ | $CH_3$ | $OCH_3$ | H | $CH_3$ | $CH_3$ | $C_2H_5$ | rotstichiges braun |
| 40. | H | H | $CH_3$ | H | $CH_3$ | H | Br | $C_2H_5$ | $C_2H_5$ | rotviolett |
| 41. | $CH_3$ | H | H | H | $CH_3$ | $CH_3$ | Cl | $C_2H_5$ | $C_3H_7$ | rotviolett |

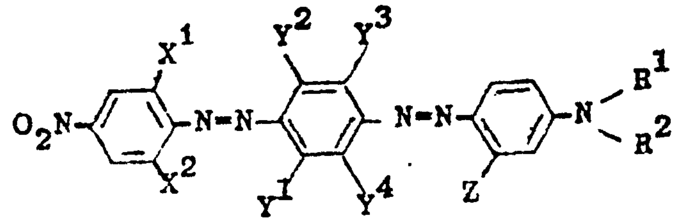

| | $X^1$ | $X^2$ | $Y^1$ | $Y^2$ | $Y^3$ | $Y^4$ | Z | $R^1$ | $R^2$ | Nuance auf Polyester |
|---|---|---|---|---|---|---|---|---|---|---|
| 42. | $CH_3$ | H | $CH_3$ | H | $OCH_3$ | H | Cl | $CH_3$ | $C_3H_7$ | rotstichiges marine |
| 43. | Cl | H | Cl | H | Cl | H | $CH_3$ | $C_2H_5$ | $(i)C_3H_7$ | rotstichiges marine |
| 44. | Cl | Cl | Cl | H | $CH_3$ | H | $OCH_3$ | $C_3H_7$ | $C_3H_7$ | rotbraun |
| 45. | H | H | Cl | H | $OCH_3$ | H | $OCH_3$ | $CH_3$ | $(n)C_4H_9$ | rotstichiges marine |
| 46. | $CH_3$ | H | $OCH_3$ | H | $OCH_3$ | H | $OCH_3$ | $CH_3$ | Allyl | rotstichiges marine |
| 47. | Cl | H | $CH_3$ | H | $OCH_3$ | H | Cl | $C_2H_5$ | Allyl | rotstichiges marine |
| 48. | Cl | Br | $CH_3$ | H | $OCH_3$ | H | $CH_3$ | Allyl | Allyl | rotstichiges braun |
| 49. | CN | H | H | H | Cl | $CH_3$ | $OCH_3$ | $CH_3$ | $(i)C_3H_7$ | rotstichiges marine |
| 50. | Cl | Cl | $CH_3$ | H | $OCH_3$ | H | $CH_3$ | $(n)C_4H_9$ | $(n)C_4H_9$ | rotstichiges braun |
| 51. | CN | H | $NHCOCH_3$ | H | H | H | H | $C_3H_7$ | $(i)C_3H_7$ | grünstichig marine |
| 52. | $CH_3$ | H | $CH_3$ | H | $CH_3$ | H | H | Crotyl | Crotyl | rotviolett |
| 53. | H | H | $CH_3$ | H | $OCH_3$ | H | $CH_3$ | $C_2H_5$ | Crotyl | rotstichiges marine |
| 54. | Cl | H | $CH_3$ | H | $OCH_3$ | H | H | $(i)C_3H_7$ | Allyl | rotstichiges marine |
| 55. | $CH_3$ | H | $OCH_3$ | H | $OCH_3$ | H | $OCH_3$ | H | $CH_3$ | marine |
| 56. | H | H | H | H | $CH_3$ | $CH_3$ | Br | H | $C_3H_7$ | rotviolett |
| 57. | H | H | $CH_3$ | H | $CH_3$ | H | Br | H | $(i)C_3H_7$ | rotviolett |
| 58. | $NO_2$ | H | $NHCOCH_3$ | H | H | H | Cl | H | $(i)C_4H_9$ | grünstichig marine |
| 59. | $CH_3$ | H | $CH_3$ | H | $CH_3$ | H | $CH_3$ | H | Allyl | rotviolett |
| 60. | $CH_3$ | H | Cl | H | $OCH_3$ | H | $CH_3$ | H | Crotyl | rotstichiges marine |
| 61. | Cl | H | Cl | H | $CH_3$ | H | $CH_3$ | $CH_3$ | Crotyl | rotviolett |

**Patentansprüche**

1. Wasserunlösliche Disazofarbstoffe der Formel I

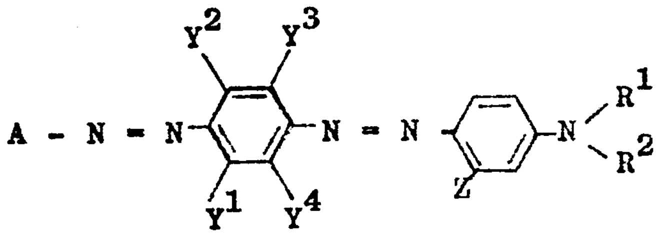

(I)

worin A für einen Phenylrest der Formel II

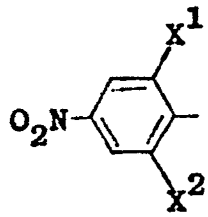

(II)

worin $X^1$ Wasserstoff, Alkyl mit 1 bis 3 C-Atomen, Chlor, Brom, Nitro oder Cyan, $X^2$ Wasserstoff,
Chlor oder Brom,
$Y^1$ Wasserstoff, Alkyl mit 1 bis 3 C-Atomen oder Chlor,
$Y^2$ Wasserstoff, Alkyl mit 1 bis 3 C-Atomen oder Chlor,
$Y^3$ Wasserstoff, Alkyl mit 1 bis 3 C-Atomen, Alkoxy mit 1 bis 3 C-Atomen oder Chlor,
$Y^4$ Wasserstoff, Alkyl mit 1 bis 3 C-Atomen bedeuten,
wobei mindestens einer und höchstens drei der Substituenten $Y^1$ bis $Y^4$ Wasserstoff sind, und sofern
$X^1$ eine Nitro- oder Cyangruppe ist und
$Y^2$ und $Y^4$ beide für Wasserstoff stehen, $Y^1$ auch noch Alkanoylamino mit insgesamt 1 bis 3 C-Atomen im Alkanoylrest bedeutet, und sofern $X^1$ für Alkyl mit 1 bis 3 C-Atomen steht,
$Y^1$ auch noch Alkoxy mit 1 bis 3 C-Atomen bedeutet,
Z Wasserstoff, Chlor, Brom, Alkyl mit 1 oder 2 C-Atomen oder Alkoxy mit 1 oder 2 C-Atomen
$R^1$ Wasserstoff, Alkyl mit 1 bis 4 C-Atomen oder Alkenyl mit 3 oder 4 C-Atomen,
$R^2$ Alkyl mit 1 bis 4 C-Atomen oder Alkenyl mit 3 oder 4 C-Atomen bedeuten.

2. Disazofarbstoffe gemäß Anspruch 1, dadurch gekennzeichnet,

daß für $X^1$, $X^2$, $Y^1$, $Y^2$, $Y^3$ oder $Y^4$ stehende Alkylgruppen Methylgruppen und für $Y^1$ oder $Y^3$ stehende Alkoxygruppen Methoxygruppen sind.

3. Disazofarbstoffe gemäß den Ansprüchen 1 und 2, dadurch gekennzeichnet, daß
$Y^1$ Methyl oder Chlor,
$Y^3$ Methoxy, Methyl oder Chlor bedeuten und $Y^2$ und $Y^4$ Wasserstoff sind.

4. Disazofarbstoffe gemäß den Ansprüchen 1 und 2, dadurch gekennzeichnet, daß
$Y^1$ und $Y^2$ Wasserstoff sind und $Y^3$ und $Y^4$ Methyl sind.

5. Disazofarbstoffe gemäß den Ansprüchen 1 und 2, dadurch gekennzeichnet, daß
$Y^3$ Methoxy, $Y^1$ Methyl oder Chlor, $Y^2$ Methyl oder Chlor und $Y^4$ Wasserstoff bedeuten.

6. Disazofarbstoffe gemäß den Ansprüchen 1 und 2, dadurch gekennzeichnet, daß
$Y^1$ Alkanoylamino mit 1 bis 3 C-Atomen,
$Y^2$ und $Y^4$ Wasserstoff und $Y^3$ Wasserstoff oder Chlor bedeuten.

7. Verfahren zur Herstellung von wasserunlöslichen Disazofarbstoffen der Formel I

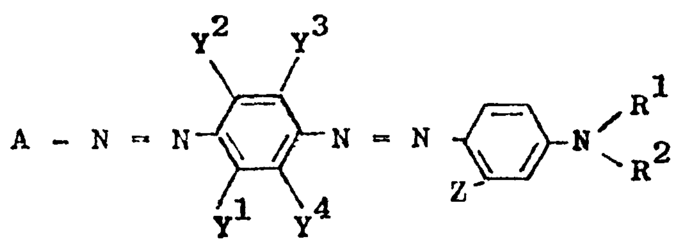

(I)

worin A, $Y^1$, $Y^2$, $Y^3$, $Y^4$, Z, $R^1$ und $R^2$ die obengenannten Bedeutungen haben, dadurch gekennzeichnet, daß eine Aminoazoverbindung der Formel III

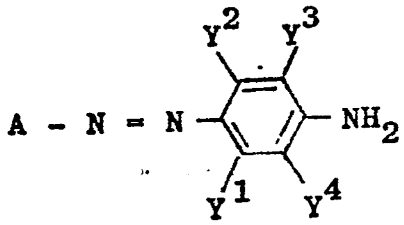

(III)

in an sich bekannter Weise diazotiert und die erhaltene Diazoniumverbindung auf ein Anilinderivat der Formel IV

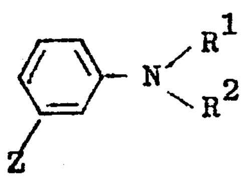

(IV)

gekuppelt wird.

8. Verfahren gemäß Anspruch 7, dadurch gekennzeichnet, daß als Aminoazoverbindung der Formel III das Rohprodukt der Verbindung eingesetzt und im Eintopfverfahren weitergearbeitet wird.

9. Verwendung von wasserunlöslichen Disazofarbstoffen der Formel I gemäß den Ansprüchen 1 bis 6 zum Färben und Bedrucken von Materialien aus hochmolekularen Polyestern, insbesondere solchen auf Basis von Polyäthylenglykolterephthalaten oder Mischungen dieser Materialien, natürlichen Materialien oder aus Zellulosetriacetat.

10. Verfahren zum Färben und Bedrucken von Fasermaterialien aus hochmolekularen Polyestern, insbesondere solchen auf Basis von Polyäthylenglykolterephthalaten oder Mischungen dieser Materialien mit natürlichen Materialien oder aus Zellulosetriacetat, dadurch gekennzeichnet, daß Farbflotten oder Druckpasten verwendet werden, die einen oder mehrere wasserunlösliche Disazofarbstoffe der allgemeinen Formel I gemäß den Ansprüchen 1 bis 6 enthalten.

Europäisches Patentamt

# EUROPÄISCHER RECHERCHENBERICHT

0008029

Nummer der Anmeldung

EP 79 10 2586

-2-

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | * Spalte 1, Zeile 66 bis Spalte 2, Zeile 65 *<br>---- | | |
| | | | RECHERCHIERTE SACHGEBIETE (Int. Cl. 3) |

EPA Form 1503.2 06.78